# EUROPEAN PATENT SPECIFICATION

(11) **EP 1 302 388 B1**
(45) Date of publication and mention of the grant of the patent: **18.01.2006**
(21) Application number: 01124637.8
(22) Date of filing: 16.10.2001
(51) Int. Cl.: B62D 25/10, B60R 21/34

(54) **Vehicle hood assembly for pedestrian protection**
Fronthaubenanordnung zum Fussgängerschutz
Ensemble de capot avant pour protection des piétons

(43) Date of publication of application: 16.04.2003
(73) Proprietor: Ford Global Technologies, LLC, Dearborn, MI 48126 (US)
(72) Inventor: Howard, Mark Shane, 52070 Aachen (DE); Schreiber, Harald, Dr.-Ing., 52064 Aachen (DE)
(74) Representative: Drömer, Hans-Carsten

(56) References cited:
- EP-A- 1 078 826
- GB-A- 2 344 080
- US-A- 5 437 348

## Description

The present invention relates to a vehicle hood assembly for pedestrian protection in accordance with the preamble of claim 1.

US 5 437 348 discloses a vehicle hood assembly corresponding to the preamble of claim 1. A front end assembly is mounted on a mounted on a front longitudinal cross beam of the vehicle structure, by means of a hinge, so that upon collision with a pedestrian, the front end assembly is capable of pivoting rearwardly into the engine compartment. Shear pins are provided to hold the front end assembly in position until the load applied thereto by impact with a pedestrian exceeds a predetermined magnitude. The trailing edge of the hood is hinged to the front end assembly. A lifting device is placed under the hood at its trailing edge, comprising rollers fixed to the hood. The rollers are running in tracks fixed to the body, the tracks are directed in rear- and upward direction.

If the vehicle is in collision with a pedestrian, impact of the leading edge of the hood cause the shear pin to fail, so that the front end assembly will pivot rearwardly. This rearward movement will cause the hood to move rearwardly and the rollers will ride up the tracks, causing the trailing edge of the hood to lift. But, this assembly can not lift the hood at the leading edge of the hood, and lifting of the hood is always depending on a rearward movement of the trailing edge of the hood.

EP 1078826 discloses a pedestrian safety module device with a deployable hood. It consists of a tilting cross beam beneath the leading edge of the hood, and a hinge assembly at the trailing edge of the hood, whereby the hood is latched to the cross beam. In case of a pedestrian impact at the leading edge the cross beam is mechanically released to rotate, so that the hood is lowered at the leading edge. Simultaneously the rotational impulse of the hood is used to lift the trailing edge of the hood. A two bar link at the rear hinge assembly is released by the hood impulse and enables lifting of the trailing edge of the hood, and locks the hood in a deployed position.

Although the hood is raised at the trailing edge, the forward area of the hood will not raise. To achieve more space between the hood and the engine parts, it is preferred to raise the hood also at the leading edge.

Accordingly, it is a primary object of the present invention to provide a vehicle hood assembly, by which the hood can be lifted by using the impact energy of a pedestrian colliding with the vehicle.

This object is achieved, according to the invention, in that one or more load transmission means are arranged between the cross beam and at least one separate lifting device for the hood. A movement of the released cross beam relative to the body is used to drive one or more separate lifting devices for the hood, whereby the transmission means transfer both movement and a load from the cross beam to the lifting devices.

When a pedestrian collides with the trailing edge of the hood, the hood is subjected to an impact load, which is transferred to the cross beam, e.g. by latch means and/or by bump stops. The cross beam is attached to the vehicle body with releasable fixings, so that in case of an overload due to the impact load of a pedestrian the fixings release the cross beam. Then both hood and cross beam moves together mainly in the direction of the impact load. This movement is used to drive at least one lifting device for lifting the hood by arranging the load transmission means between cross beam and lifting devices. Preferably several lifting devices are arranged at the trailing edge of the hood and near the fixing of the cross beam. By this arrangement of the lifting devices and by driving the lifting devices with the movement of the cross beam, the lifting of the hood could be achieved with only the impact load of the pedestrian.

The hood assembly according to the invention works completely mechanical without the need of an additional control device, therefore no sophisticated and noisy electronic safety controls are required. Additionally the drive of the lifting device works without stored energy like airbags, pyrotechnic hinges, spring devices or other lifting devices known from prior art. This is a big advantage in so far as after years in service the stored energy may be reduced, e. g. because a spring is corroded, or the stored energy could not be activated, e.g. because of defective contacts in a pyrotechnic device.

Although it is a big advantage of the hood assembly, that it is working completely mechanically, it could be useful to combine this system with other safety devices for pedestrian protection. Therefore also other safety devices for pedestrian protection like electronic safety sensors and controls, actuators etc. could be used in conjunction with the present invention.

The object of the invention is also achieved in that a movement of the released cross beam relative to the body is used to drive at least one release mechanism of one or more separate lifting devices for the hood. Here the cross beam acts in the same way as described in the previous embodiment. The only difference is, that now the movement of the cross beam is used to drive any release mechanism of a lifting device. This could be used in conjunction with the previous embodiment, when the cross beam first drives a release mechanism of the lifting device and then drives the lift device itself for lifting the hood. It could be also used to drive just a release mechanism of a lifting device, and than the released lifting device lifts the hood by with the support of stored energy as known from prior art.

In another example the released cross beam is guided in an elongated guide. The elongated guide can be e.g. a rail or a slotted hole, in which the cross beam or a part of the cross beam slides after the impact load has released the fixings. The guide provides a defined direction for the movement of the cross beam, so that the drive for the lifting device can be attached accordingly to the cross beam to get a maximum of displacement and acting force on the drive.

In another example the released cross beam is guided in a pivot guide. The pivot guide can be realised by supporting the cross beam rotary in the vehicle body or, in conjunction with the previous embodiment, the cross beam is supported rotary in the elongated guide, so that the cross beam tilts around the pivot guide axis after the impact load has released the fixings. Also the pivot guide provides a defined tilting of the cross beam, so that the drive for the lifting device can be attached accordingly to the cross beam to get a maximum of displacement and acting force on the drive. It should be noted that both elongated guide and pivot guide could be used separate or in conjunction.

Preferably the cross beam is pivoted to a cooling pack. The task of the cooling pack is to support the cross beam, especially when the cross beam extends in forward direction at the centreline of the vehicle, while at the releasable fixings, located at the left and right ends of the cross beam, the cross beam extends more rearwards. As the cooling pack is mounted more or less rotary on a lower support beam, for example by fixing the cooling pack with elastic elements to the lower support beam, the whole cooling pack can tilt around the lower support beam. The cooling pack and the pivoted cross beam builds a two bar link, so that in case of a pedestrian impact both can move and tilt together. By this the tilting of the cross beam during the movement of the cross beam can be defined exactly, which helps to get a more precise deformation for the drive of the lifting devices.

The relative movement of the cross beam for the drive of a lifting device may be transferred with a rod. This could be a direct push rod, but is also possible to have several rods and bars linked together, so that the mechanical movement and force is transferred to lifting devices at the trailing at of the hood. Also cable or hydraulic means can be used to transfer the movement. This could be applied if there is not enough package space available to realise a direct rod connection.

In the head assembly according to the invention, the lifting device comprises a two bar link, whereby the bars are linked together at a central pivot, the first bar is supported with its outer end at a fixed body pivot, the drive of the lifting device acts at the central pivot, and the outer end of the second bar supports the hood. By this arrangement a high lift-displacement can be achieved with only few displacement of the drive respectively the cross beam due to the double bar linkage. Further advantage is that the double bars are locked in the upper position so that the hood will stay in the upper position with no additional locking mechanism required.

A further improvement is that the outer end of the second bar is supported on a rail, allowing transverse movement mainly in vertical directions. This guides the outer end of the second bar exactly in the direction where the lift is required. The outer end acts directly or indirectly, e.g. with additional bumper blocks, on the hood. So the hood lifts precisely in the direction of the rail.

In the hood assembly according to the invention, the lifting device comprises a two bar link, whereby the bars are linked together at a central pivot, the first bar is supported with its outer end at a fixed body pivot, the drive of the lifting device acts at the end of the second bar, and the central pivot supports the hood. Due to the double bar link the force of the drive is transformed, so that with relative low impact forces the hood can be lifted. Further advantage is that in the upper position the bars are locking the hood, so no additional locking mechanism is required.

Further advantageous embodiments and designs are to be found in the drawings, in which shows:
- Fig. 1: a perspective view of the hood assembly;
- Fig. 2a: a sketch showing on principle the behaviour of the hood assembly during collision with a pedestrian with the un-lifted hood;
- Fig. 2b: a sketch showing on principle the behaviour of the hood assembly during collision with a pedestrian with the lifted hood;
- Fig. 3: a perspective view of the hood assembly with a double-rod-drive of the lifting devices; and
- Fig. 4: a sketch showing on principle another two-bar-link lifting device.

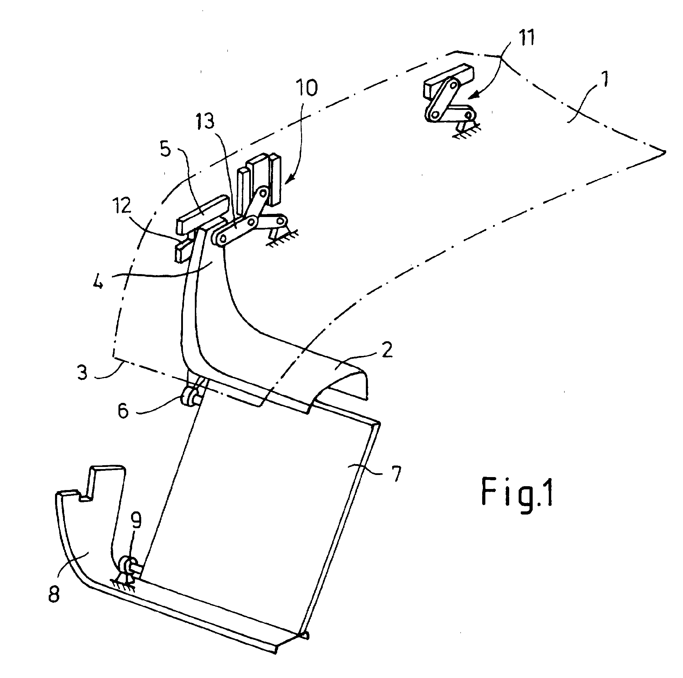

As illustrated in Figure 1, a vehicle hood assembly comprises a hood 1 and an upper front cross beam 2 located below the leading edge 3 of the hood 1. As the hood assembly is fully symmetrically, only one side, starting at the centreline of the vehicle, is shown. The cross beam 2 is supported at its outer ends 4 at a releasable fixing 5, whereby the releasable fixing 5 is attached to the vehicle body, which is not shown here. Further the cross beam 2 comprises a pivot 6, at which the cross beam 2 is connected rotary to the cooling pack 7. The cooling pack 7 is supported on a lower support beam 8, whereby a lower pivot 9 ensures the rotary support between lower support beam 8 and cooling pack 7. Further the hood assembly comprises a forward lifting device 10, located near the releasable fixing 5, and a rearward lifting device 11, located near the rearward edge of the hood 1.

The outer end 4 of the cross beam 2 is supported in an elongated guide 12 of the releasable fixing 5, which allows in a released condition both transversal movement and tilting of the cross beam 2. To ensure that the cross beam 2 can withstand in the unreleased condition normal service loads without moving and tilting in the elongated guide 12, at least on releasable connection is added between cross beam 2 and releasable fixing 5, for example a shear pin like described in EP 1078826. The cross beam 2 is connected with the lifting device 10 by a load transmission mean, the push rod 13.

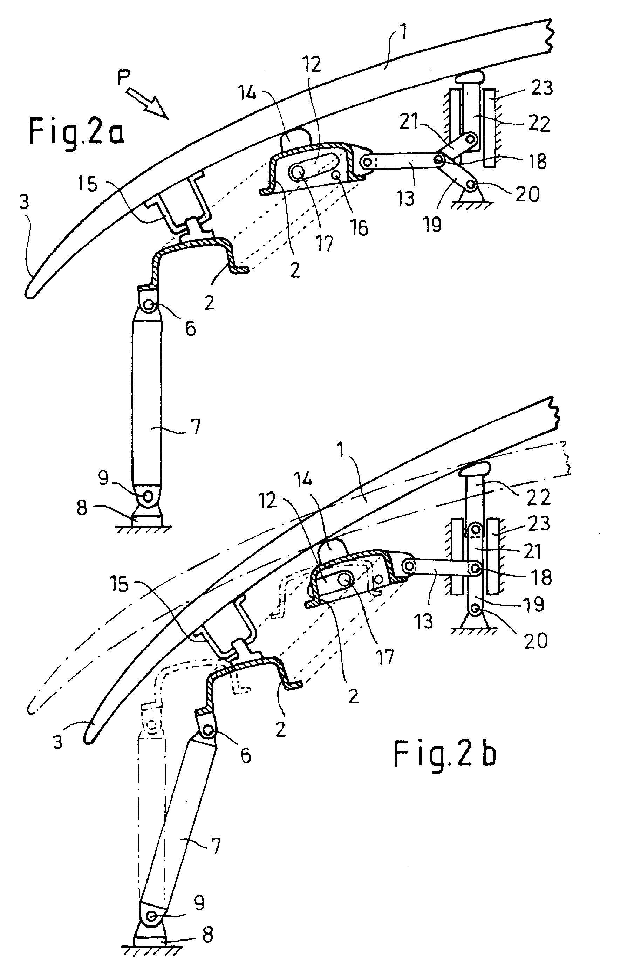

Figure 2a and 2b illustrates a sketch showing on principle the behaviour of the hood assembly during collision with a pedestrian, whereby Figure 2a illustrates the un-lifted hood and Figure 2b the lifted hood.

When a pedestrian collides with the leading edge 3 of the hood 1, the resulting impact load P is transferred from the hood 1 to the cross beam 2 by bump stops 14 and/or by the hood latch 15. Under the impact P the shear pin 16 fails and the cross beam 2, which is supported with its bolt 17 in the elongated guide 12, is released. As shown in Figure 2b then the cross beam 2 slides along the elongated guide 12, which is preferably oriented in rearward vehicle direction.

Although the cross beam 2 is supported also by the cooling pack 7, the cooling pack does not stop the cross beam 2 from sliding backwards. As the cooling pack is supported double pivoted with pivot 6 to the cross beam 2 and with the lower pivot 9 to the lower support beam 8, the cooling pack acts as a double rotary supported bar, allowing the backwards moving of the cross beam 2 while only tilting it a little bit according to the geometrically arrangement of the elongated guide 12 and the pivots 6 and 8.

The backwards sliding of the cross beam 2 is transferred with the push rod 13 from the cross beam 2 to the lifting device 10. The lifting mechanism comprises a two bar link, whereby the bars are linked together at a central pivot 18. The first bar 19 is supported with its outer end at a fixed body pivot 20. The push road 13 as the drive of the lifting device acts at the central pivot 18, and the outer end of the second bar 21 is pivoted to a sliding bolt 22, which is guided in a rail 23, oriented mainly in vertical direction. The sliding bolt 22 acts directly on the hood 1, lifting the hood 1 as shown in Figure 2b.

To ensure lifting of the hood 1, also the rearward lifting device 11 must be released in so far, that the rearward edge of the hood 1 can be raised as much as required. This can be realized according to a mechanism disclosed in EP 1078826 or any other mechanism known from prior art.

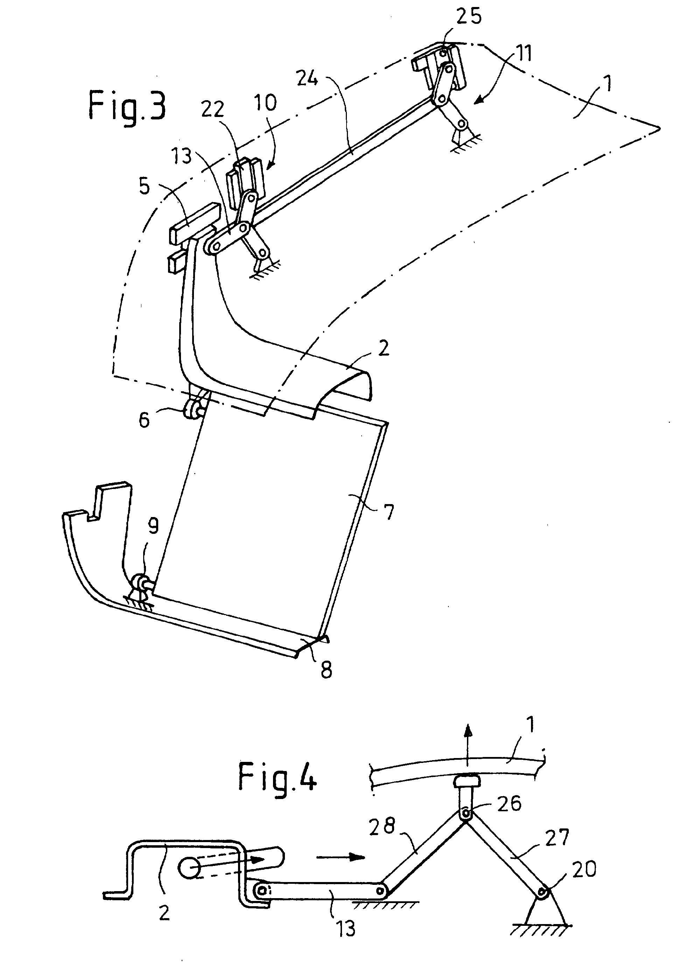

Figure 3 shows a perspective view of the hood assembly with a double-rod-drive of the lifting devices 10 and 11. An additional push rod 24 is arranged between the lifting devices 10 and 11, driven by the first push-rod 13. The lifting mechanism of the rearward lifting device 11 is the same as of the forward lifting device 10. Just the sliding bolt 22 is replaced by a hinge bolt 25 to create a hinge for the hood 1, what is required for opening the hood 1 for service purposes.

Figure 4 illustrates a sketch showing on principle another two-bar-link lifting device, in which the bars are linked together at a central pivot 26, the first bar 27 is supported with its outer end at a fixed body pivot 20. The push rod 13 acts at the end of the second bar 28, while the central pivot 26 lifts the hood 1.

## Claims

1. A vehicle hood assembly for pedestrian protection, including a hood (1) and an upper front cross beam (2) located below the leading edge (3) of the hood (1), the cross beam (2) is attached to the vehicle body with releasable fixings (5), whereby the fixings (5) release the cross beam (2) under an overload due to the impact load resulting from the collision of a pedestrian with the leading edge (3) of the hood (1), one or more load transmission means are arranged between the cross car beam (2) and at least one separate lifting device (10, 11) for the hood,
**characterised in that**
a lifting device (10, 11) comprises a two bar link, whereby the bars are linked together at a central pivot (18), the first bar (19) is supported with its outer end at a fixed body pivot (20), the drive of the lifting device acts at the central pivot (18), and the outer end of the second bar (21) supports the hood (1).

2. A vehicle hood assembly according to claim 1,
**characterised in that**
the outer end of the second bar (21) is guided on a rail (23), allowing transverse movement mainly in vertical directions.

3. A vehicle hood assembly according to the preamble of claim 1,
**characterised in that**
a lifting device comprises a two bar link, whereby the bars are linked together at a central pivot (26), the first bar (27) is supported with its outer end at a fixed body pivot (20), the drive of the lifting device acts at the end of the second bar (28), and the central pivot (26) supports the hood (1).

4. A vehicle hood assembly according to any of the preceding claims,
**characterised in that**
the cross beam (2) is pivoted to a cooling pack (7).

5. A vehicle hood assembly according to any of the preceding claims,
**characterised in that**
the load transmission mean is a rod (13, 24).

## Patentansprüche

1. Fronthaubenanordnung zum Fußgängerschutz mit einer Fronthaube (1) und einer unter dem vorderen Rand (3) der Fronthaube (1) angeordneten oberen vorderen Querstrebe (2), die mit freigebbaren Befestigungsvorrichtungen (5) an der Fahrzeugkarrosserie angebracht ist, wobei die Befestigungsvorrichtungen (5) die Querstrebe (2) unter einer Überlastung, die auf die sich aus dem Zusammenstoß eines Fußgängers mit dem vorderen Rand (3) der Fronthaube (1) ergebende Stoßbelastung zurückzuführen ist, freigeben, wobei ein oder mehrere Lastübertragungsmittel zwischen der Querstrebe (2) und mindestens einer getrennten Hebevorrichtung (10, 11) für die Fronthaube angeordnet sind, **dadurch gekennzeichnet, dass** eine Hebevorrichtung (10, 11) einen Lenker mit zwei Stäben aufweist, wobei die Stäbe an einem mittleren Drehzapfen (18) miteinander verbunden sind, der erste Stab (19) mit seinem äußeren Ende an einem festen Karrosseriedrehzapfen (20) gestützt ist, der Antrieb der Hebevorrichtung am mittleren Drehzapfen (18) angreift und das äußere Ende des zweiten Stabs (21) die Fronthaube (1) stützt.

2. Fronthaubenanordnung nach Anspruch 1, **dadurch gekennzeichnet, dass** das äußere Ende des zweiten Stabs (21) auf einer Schiene (23) geführt ist, wodurch eine Querbewegung hauptsächlich in vertikalen Richtungen gestattet ist.

3. Fronthaubenanordnung nach dem Oberbegriff von Anspruch 1, **dadurch gekennzeichnet, dass** eine Hebevorrichtung einen Lenker mit zwei Stäben aufweist, wobei die Stäbe an einem mittleren Drehzapfen (26) miteinander verbunden sind, der erste Stab (27) mit seinem äußeren Ende an einem festen Karrosseriedrehzapfen (20) gestützt ist, der Antrieb der Hebevorrichtung am Ende des zweiten Stabs (28) angreift und der mittlere Drehzapfen (26) die Fronthaube (1) stützt.

4. Fronthaubenanordnung nach einem der vorhergehenden Ansprüche, **dadurch gekennzeichnet, dass** die Querstrebe (2) zum Kühlpaket (7) geschwenkt ist.

5. Fronthaubenanordnung nach einem der vorhergehenden Ansprüche, **dadurch gekennzeichnet, dass** das Lastübertragungsmittel eine Stange (13, 24) ist.

## Revendications

1. Ensemble de capot avant de véhicule pour la protection des piétons, comprenant un capot (1) et une poutre transversale avant supérieure (2) située en dessous du bord avant (3) au capot (1), la poutre transversale (2) étant attachée à la carrosserie du véhicule à l'aide de fixations amovibles (5), les fixations (5) libérant la poutre transversale (2) en cas d'application d'une surcharge à la suite d'un impact résultant de la collision d'un piéton avec le bord avant (3) du capot (1), un ou plusieurs moyen(s) de transmission de charge étant arrangé(s) entre la poutre transversale (2) et au moins un dispositif de levage séparé (10, 11) pour le capot,
**caractérisé en ce que**:
un dispositif de levage (10, 11) comprend une connexion à deux barres, les barres étant reliées l'une à l'autre à un pivot central (18), la première barre (19) est supportée avec son extrémité extérieure à un pivot fixe (20) de la carrosserie, la commande du dispositif de levage agit sur le pivot central (18), et l'extrémité extérieure de la deuxième barre (21) supporte le capot (1).

2. Ensemble de capot avant de véhicule selon la revendication 1, **caractérisé en ce que**:
l'extrémité extérieure de la deuxième barre (21) est guidée sur un rail (23), permettant ainsi un déplacement transversal principalement dans des directions verticales.

3. Ensemble de capot avant selon le préambule de la revendication 1, **caractérisé en ce que**:
un dispositif de levage comprend une connexion à deux barres, les barres étant reliées l'une à l'autre à un pivot central (26), la première barre (27) est supportée avec son extrémité extérieure à un pivot fixe (20) de la carrosserie, la commande du dispositif de levage agit à l'extrémité de la deuxième barre (28), et le pivot central (26) supporte le capot (1).

4. Ensemble de capot avant de véhicule selon l'une quelconque des revendications précédentes, **caractérisé en ce que**:
la poutre transversale (2) est articulée sur un ensemble de refroidissement (7).

5. Ensemble de capot avant pour véhicule selon l'une quelconque des revendications précédentes, **caractérisé en ce que**:
le moyen de transmission de charge est une bielle (13, 24).
